(19) Europäisches Patentamt
European Patent Office
Office européen des brevets

(11) Publication number: 0 328 534 B1

# (12) EUROPEAN PATENT SPECIFICATION

(45) Date of publication of patent specification: 27.02.91 Bulletin 91/09

(51) Int. Cl.$^5$: G11B 5/706, H01F 1/11

(21) Application number: 87906664.5

(22) Date of filing: 12.10.87

(86) International application number: PCT/EP87/00598

(87) International publication number: WO 88/03308 05.05.88 Gazette 88/10

## (54) A PROCESS FOR THE PREPARATION OF MAGNETIC HEXAFERRITE PARTICLES, PARTICLES OBTAINED AND PRODUCTS CONTAINING THEM.

(30) Priority: 23.10.86 FR 8614937

(43) Date of publication of application: 23.08.89 Bulletin 89/34

(45) Publication of the grant of the patent: 27.02.91 Bulletin 91/09

(84) Designated Contracting States: BE DE FR GB NL

(56) References cited:
EP-A- 0 178 269
DE-A- 2 736 882
DE-A- 3 527 478
FR-A- 2 329 595

(73) Proprietor: EASTMAN KODAK COMPANY (a New Jersey corporation)
343 State Street
Rochester New York 14650 (US)

(72) Inventor: PINGAUD, Bernard Kodak-Pathé
CRT - Zone Industrielle
F-71102 Chalon-sur-Saône Cédex (FR)
Inventor: NAJMI, M E Ecole Nat Supér de Chimie de Strasb
Dép Science des Matériaux 1, rue Blaise-Pascal
F-67008 Strasbourg Cédex (FR)
Inventor: POIX, P Ecole Nat Supér de Chimie de Strasbourg
Dép. Science des Matériaux 1, rue Blaise-Pascal
F-67008 Strasbourg Cédex (FR)
Inventor: BERNIER, J-C Ecole Nat.Supér.de Chimie
Dép. Science des Matériaux 1, rue Blaise-Pascal
F-67008 Strasbourg Cédex (FR)

(74) Representative: Buff, Michel et al
Kodak-Pathé Département des Brevets et Licences CRT Centre de Recherches et de Technologie Zone Industrielle
F-71102 Chalon sur Saône Cédex (FR)

EP 0 328 534 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

### TECHNICAL FIELD

The present invention relates to a process for preparing hexaferrites of bivalent metals, wherein the morphology of the resulting particles can be predetermined in relation to the morphology of the starting particles. The present invention further relates to hexaferrite particles obtained by this process and also to the applications of these particles to magnetic recording.

Hexaferrites of bivalent metals, and especially hexaferrites of alkaline-earth metals are well known for their magnetic properties. In particular, they exhibit a high coercivity, which makes them suitable for all the applications requiring such a high coercivity. Recently, it has been observed that the use of particles, compositions and products for magnetic recording such as disks and audio or video tapes are also desirable for applications requiring a good storage of the record and/or good resistance to falsification or accidental erasing,including credit cards, ID cards, restricted access cards and the like. Hexaferrites proved to be particularly useful for these applications. In addition these hexaferrites, which are in the form of hexagonal plates, allow a high density recording.

### BACKGROUND ART

The conventional processes for preparing hexaferrites may be sorted out in several categories :

1) "Ceramics processes" which consist in mixing the starting salts or oxides in the form of powder, calcining the powders at high temperature, and then milling the crystalline agglomerate obtained. The heat treatment results in coarse particles and the milling in a broad particle size distribution. These disadvantages render the hexaferrites prepared by the ceramics process non-suitable for magnetic recording.

2) Chemical processes of aqueous coprecipitation either at room temperature, or under pressure in an autoclave (hydrothermal synthesis). At room temperature, the coprecipitation has to be followed by annealing and milling, although these conditions are less intense than in the ceramic process, the same disadvantages result. It is easier to control the size of hexaferrite particles and to obtain thinner particles, when pressure is employed, however all the disadvantages resulting from operating under pressure result. In addition, since very thin particles exhibit poorer magnetic properties, a compromise must be found.

3) Molten state processes, such as glass recrystallization, consists in melting a mixture of starting oxides and a glass forming material such as $B_2O_3$ at high temperature, quenching the mixture, and then heating to cause the crystallization of the hexaferrite within the glass. The glass like matrix is then removed by washing.

4) Japanese patent 60054923 discloses a process for preparing magnetoplumbite type ferrites by mixing and then hydrolysing an iron alkoxide with an alkoxide of another metal. The process of the present invention differs from the process disclosed in the Japanese patent by involving a sole alkoxide.

All these processes result in hexaferrited exhibiting a hexagonal plate shape. They do not enable to obtention of another morphology such as needles, nodules or cubes. German Patent 2 736 882 describes a process for the production of spherical grain-ferrite powder, consisting in making a suspension in a combustible organic liquid of a very fine powder of one or more ferrite-forming raw materials and spraying it into a high temperature atmosphere having a temperature above the catch-fire point of the organic liquid.

Hexaferrites exhibiting other morphologies such as needles or nodules, having a size smaller than the plates and a suitable magnetization would make it possible to combine :

1) the advantages provided by small sizes that may be obtained with $\gamma Fe_2O_3$ iron oxide particles or metallic iron, such as those disclosed in French patent No 2 487 326 and PCT WO 86/05026, with

2) the advantages provided by the high coercivity, good chemical and heat stability of hexaferrites. The small size of the particles permits the obtention of low background noises and, thanks to the improved capacity of the magnetic layer, of a high packing density in the magnetic recording. In addition, the use of cubic or nodular particles allows isotropic recording which is preferred for certain applications. Thus, the obtention of such hexaferrite particles is highly desired.

### DISCLOSURE OF INVENTION

The process of the present invention allows the obtention of hexaferrites of bivalent metals, in the form of particles exhibiting a predeterminated morphology to obtain the advantages aforementioned, and is

characterized in :

a) reacting FeO(OH) particles having a given morphology with an alkoxide of a bivalent metal, in alcoholic solution.

b) heat treating the product obtained in step a) after drying at a temperature lower than the temperature at which the morphology of the starting FeO(OH) disappears.

The process of the invention allows to keep the morphology of the starting ferric hydroxide particles, and, taking into account the various particles which are available introduces a flexibility and control parameter which is essential in the obtention of hexaferrite particles. Further, the process of the invention avoids heat treatment at high temperature required in ceramics processes of the prior art, which constitutes an obvious economic advantage.

Brief Description of Drawing

The sole figure is a curve showing the loss in weight versus temperature.

Best mode of carrying out the invention

The invention relates to hexaferrite particles obtained by the process of the invention, the morphology of which is identical to the one of the starting particles.

In the first step, the starting product is feO(OH) particles which can exhibit α, γ or δ shape. These particles can be acicular, cubic or nodular.

The processes for the preparation of acicular α FeO(OH) (goethite) are well known. In general they consist in oxidizing an alkaline solution of a ferrous salt, for example a sulfate or a chloride by bubbling oxygen.

A particular and advantageous process for preparing acicular goethite is disclosed in French Patent No 2 487 326. In this process, the ferrous salt solution is subjected to reducing conditions prior to or after it is added to an alkaline hydroxide solution, the oxidation starting only after the ferrous hydroxide is precipitated. This reaction is carried out in a device called a "rotatory saucer", disclosed in French Patent No 1 157 156 which allows a quick dispersion of the reactants. Acicular goethite particles obtained are in average 0.2 to 1.5 μm long.

PCT WO 86/05026 discloses the preparation of δ ferric hydroxide in the form of nodules having very small facets, i.e. a 0.02-0.05 μm average diameter.

The alkoxides of the bivalent metal used have as formulae $M(OR)_2$, wherein R is a straight or branched alkyl radical having 1 to 20 and preferably 1 to 8 carbon atoms such as methyl, ethyl, propyl, butyl and M is a bivalent metal such as barium, strontium, lead, calcium or cadmium.

Alkoxides of bivalent metals may be prepared in various ways. Typically, for preparing an alkoxide, an alcohol is reacted with a metal. Another process will be described below.

The first step of this process consists in reacting the ferric hydroxide particles with the metal alkoxide in alcoholic solution. For that purpose, ferric hydroxide particles, once dried, are dispersed in an organic solvent by any appropriate mechanical or ultrasonics means to obtain a suspension as stable and homogenous as possible. Preferably, anhydrous alcohol is used and advantageously the one used in the alkoxide preparation. A calculated amount of metal alkoxide in alcoholic solution is added to obtain $(MO)_x 6\ Fe_2O_3$, x ranging from 1 to 2. The reaction takes place in the vicinity of the boiling point of the alcohol released during the reaction. The product obtained is dried and then heat treated. The temperature and the duration of the heat treatment which depend on the nature of the particle are such that they allow to keep the morphology of the starting ferric hydroxide particles. Appropriate temperatures are in the range of 700 to 900°C, and preferably from 700 to 850°C. Treatment durations are in the range of 10 mn to 24 h and preferably from 1 h to 2 h, depending on the temperature of the heat treatment.

By way of illustration, the examples disclose the preparation of barium hexaferrite starting from FeO(OH) and barium ethoxide. The examples describe various procedures and the results obtained.

According to the process of the invention, acicular hexaferrite particles may be obtained, the acicularity of which, i.e. the length to diameter ratio is in the range of 5 to 30 and preferably from 5 to 20. Nodular hexaferrite particles may also be obtained, the average diameter of which is in the range of 0.02 to 0.1 μm and preferably from 0.03 to 0.06 μm.

As it is well known, polyvalent metal doping ions may be introduced to modify as desired the magnetic properties of the resulting particles and especially the coercivity.

In this way, $Fe^{3+}$ ions may be partly replaced by a combination of ions having different valences, e.g. by the following pairs of cations ($Zn^2$–$Ti^4$), ($Ni^2$–$Ti^4$), ($Co^2$–$Ti^4$), ($Zn^2$–$V^5$), ($Zn^2$–$Nb^5$), etc, which generate solid

compositions having as formulae $BaM^{2}_{x}M^{4}_{x}Fe_{12-2x}O_{19}$ and $BaM^{2}_{2x}M^{5}_{x}Fe_{12-3x}O_{19}$

In any case, the coercivity, the saturation magnetization, the Curie point decreases as the substitution number x increases, except in the case of $Co^{2}$-$Ti^{4}$ where the saturation magnetization slightly decreases. Information regarding the adjustment of magnetic properties by doping may be found in the publication of Hartmut Hibst, Angew Chem. Int. Ed. Engl. 21 (1982) 270-282.

Doping ions may be introduced, either in the form of alkoxides of these ions, according to the procedure of the invention, or by any suitable means. In particular, the starting ferric hydroxide may be, for example, already Co doped.

Hexaferrite magnetic particles, prepared according to the process of the invention can be used in magnetic recording layers coated on a wide range of non-magnetizable supports, including disks, belts supports, etc. The particles according to the present invention can be used for audio, video and instrumentation (physical data) recording tapes. Suitable supports can be subbed by known methods. They are generally flexible and include such materials as cellulose acetate film, poly(vinylacetal) film, polystyrene film, polyesters such as poly(ethylene terephtalate) film which can be biaxially or asymmetrically stretched, polycarbonate film, etc. as well as paper, cardboard, metals such as aluminum or brass, etc. The thickness of the support is subject to variation ; however such supports generally have a thickness in the range of about 4 to 300 µm, often in the range of about 6 and 30 µm and preferably from 12 to 25 µm. The support face coated with the magnetic composition should be as smooth as possible.

Binders that can be used to disperse hexaferrite particles are any of the binders well known for the manufacture of magnetic recording tapes. Typical binders are polymers such as poly(vinylacetate-co-vinyl chloride), poly(vinylidene chloride-co-acrylonitrile), acrylic and/or methacrylic esters copolymers, polyvinyl butyral, poly(butadiene-co-styrene), poly(acrylonitrile-co-vinylidene chloride-co-maleic anhydride), crosslinked or non-crosslinked homopolymers or copolymers such as polyamides, polyurethanes, polyesters, etc. and the mixture thereof. Very good results are obtained with poly(vinyl chloride-co-vinyl acetate), partially hydrolysed and optionally crosslinked with an isocyanate or else by using polyurethanes or polyesters or a mixture thereof. The concentration of binder with respect to the amount of hexaferrite particles is generally in the range of about 10 to about 40% and preferably from about 15% to about 25% by weight.

Suitable solvents that can be employed in the preparation of magnetic dispersions include organic materials such as methylethylketone, methylethylisobutylketone, ethyl acetate, butyl acetate, cyclohexanone, butyl alcohol, methylene chloride etc. as well as the mixtures thereof. The magnetic layers may contain other additives such as lubricants, as it is well known by those skilled in the art. The methods of manufacture and the material employed as taught in US Patent 4,253,492 may be utilized herein for the preparation of magnetic recording elements.

The following examples are set forth hereinafter to further illustrate this invention.

## Example 1

### Preparation of acicular barium hexaferrite

Study of the reaction conditions

1) Synthesis of barium ethoxide

Absolute ethanol was reacted with BaO, according to the following reaction :

$$BaO + 2C_2H_5OH \rightarrow Ba(C_2H_5O)_2 + H_2O$$

Since it is known that $H_2O$ destabilizes $Ba(C_2H_5O)_2$, the dehydrating power of BaO had been used by adding 1 mole of BaO, according to the following :

$$2\,BaO + 2\,C_2H_5OH \rightarrow Ba(C_2H_5O)_2 + Ba(OH)_2$$

The reaction took place at about 80°C in ethanol solution. After decantation of $Ba(OH)_2$, $Ba(C_2H_2O)_2$ was recovered in alcoholic solution. The amount of barium in solution was determinated with $H_2SO_4$ in order to calculate the amount of solution to be added in the next step.

2) Preparation of α FeO(OH)

The starting product was acicular α FeO(OH) prepared as follows : an aqueous ferrous sulfate solution was oxidized slowly, by bubbling air for 40 h at pH 6 and 40-45°C. Goethite needles were obtained, the average length of which was 0.3-0.5 µm as determined by viewing with a transmission election microscope at 25,000 X.

3) Reaction between α FeO(OH) and barium ethoxide

5 g of oven-dried goethite needles were dispersed by ultrasonics in 400 ml of anhydrous ethanol for 15 mn. An amount of $Ba(C_2H_5O)_2$ in ethanol solution was added calculated to obtain 1 Ba mole per 12 Fe moles. The reaction mixture was then heated with reflux at 78-80°C for 2 h. After evaporating the solvent, the resulting product was oven-dried at 120°C.

A thermogravimetric analysis was carried out, the results of which are shown in the figure which shows the loss of weight versus temperature. Curve (1) represents a control α FeO(OH) alone, and curve (2) the reaction product. At about 300°C, α FeO(OH) alone loses about 10% water, which corresponds to 6 moles of $H_2O$ per 12 moles α-FeO(OH). After reaction with Ba ethoxide, the loss of water is somewhat less, i.e. 5 moles of $H_2O$ per 12 moles of a (FeO)OH.
This result demonstrates that the reaction took place. Although it is not desired to be bound with any interpretation, it may be supposed that the reaction is the following :

$$12\ FeO(OH) + Ba(C_2H_5O)_2 \rightarrow Fe_{12}BaO_4(OOH)_{10} + 2C_2H_5OH$$

4) Heat treatment

A sample of the reaction product obtained in step 3 is placed in the oven previously stabilized at a given temperature, for a given time, as indicated in Table I below. For each temperature/time couple, the sample is removed from the oven, a sampling is taken for analysis, then the sample is replaced in the oven. The particles obtained for each temperature/time couple are examined under electron microscope. Their X-ray diffraction pattern is worked out and their magnetic properties determined, i.e. saturation magnetization $\sigma_s$, remanent magnetization $\sigma_r$ and coercivity $H_c$.

The reaction mixture after a 10 mn heat treatment at 800°C (magnification 25,000 X) and after a 40 min heat treatment at 800°C (magnification 100.000 X) are acicular in nature. When then starting material FeO(OH) goethite needles are heated for 40 min at 800°C and then viewed under transmission electron microscope (25,000 X) they undergo a change in morphology by losing their acicular form and begin to agglomerate.

According to the X-ray diffraction pattern, barium hexaferrite appears at 800°C. Barium hexaferrite particles prepared according to the procedure of the invention, have kept their acicular form, meanwhile the starting acicular goethite particles heated at 800°C have lost their acicular form and agglomerate.

If it is further heated either at a higher temperature or during a longer time, the acicular form is gradually lost.

Table I set forth the magnetic properties of the products for each temperature/time couple. The saturation magnetization is given in emu/g, which can be converted in S1 Units by the relation : 1 emu/g=0.0065 $Wb/m^2$.

The coercitive field is given in oersteds, which can be converted in S1 Units by the relation : 1 oersted=0.07958 kA/m. At 800°C, temperature at which the acicular form is kept, a magnetization plateau is obtained which does not substantially vary for 2 h. The saturation magnetization stabilizes at about 47 uemcgs/g (0,305 $Wb/m^2$)

The needles obtained after a 40 min annealing at 800°C have an average length of about 0.2-1 µm, an acicularity of 5-10 and a specific surface area of 18-20 $m^2/g$.

TABLE 1

| Heat treatment ($T^oC$ /Time) | $\sigma_s$ (uemcgs/g) (0.0065 $Wb/m^2$) | $\sigma_r$ (uemcgs/g) (0.0065 $Wb/m^2$) | Hc (oe) (0.07958 KA/m) |
|---|---|---|---|
| 550/ 5 h | 0.2 | 0 | 50 |
| 700/ 2 h | 5.1 | 1.8 | 260 |
| 750/22 h | 30.4 | 15.6 | 5300 |
| 800/10 mn | 28.5 | 14.6 | 4800 |
| 800/20 mn | 43.0 | 22.3 | 5000 |
| 800/30 mn | 43.3 | 23.1 | 5080 |
| 800/40 mn | 44.3 | 23.0 | 5100 |
| 800/ 1 h | 45.2 | 23.2 | 5200 |
| 800/ 2 h | 46.8 | 24.1 | 5220 |
| 800/ 4 h | 47.6 | 25.8 | 5300 |
| 850/40 mn | 51.4 | 26.5 | 4800 |
| 900/40 mn | 51.9 | 26.8 | 4800 |
| 950/40 mn | 54.2 | 27.8 | 4900 |
| 970/ 5 mn | 47.4 | 24.8 | 5430 |
| 970/30 mn | 60.5 | 31.4 | 5600 |
| 970/ 1 h | 61.1 | 31.9 | 5700 |
| 970/16 h | 61.8 | 32.2 | 5700 |
| 1020/ 2 h | 61.7 | 32.4 | 5430 |
| 1020/ 5 h | 66.4 | 34.9 | 4400 |
| 1020/16 h | 67.9 | 36.3 | 3730 |

Example 2

Variations in barium amount.

The procedure of Example 1 was repeated except that the amount x of barium alkoxide was in the range of 1 to 2 moles per 12 moles of α FeO(OH).

The products were reheated at 800°C for 40 min, their X-ray diffusion pattern worked out, their magnetic characteristics determined. The maximum magnetization was obtained for x=1.7.

Example 3

Variations in the reaction conditions

The procedure of Example 1 was repeated except that the following conditions were changed in turn :

1) reaction time : 2 h and 24 h

2) reaction mode (two-step reaction) : 2/3 mole of barium ethoxide per 12 moles of α FeO(OH) were added, the resulting product was heated to 250°C and then dissolved in ethanol, and 1/3 mole barium ethoxide was added.

3) The reaction medium was diluted : 0.5 g of FeOOH in 400 ml of $C_2H_5OH$.

4) The dispersion time : the FeOOH suspension in ethanol was stirred by means of ultrasonics for 2 h.

In all the runs, the reaction product was heated at 800°C for 40 min. The magnetic results are gathered in tables II to V.

Table II : Reaction duration

| Duration | σs (uemcgs/g) | σr (uemcgs/g) | Hc (oe) |
|---|---|---|---|
| 2 h | 44.4 | 23.0 | 5120 |
| 24 h | 43.5 | 21.5 | 4850 |

Table III : Two-step reactions

| Ba(mol) | σs (uemcgs/g) | σr (uemcgs/g) | Hc (oe) |
|---|---|---|---|
| 2/3 | 23.5 | 12.2 | 5000 |
| 2/3 + 1/3 | 44.9 | 21.0 | 4900 |

Table IV : reaction in very diluted medium (0.5g de FeOOH in 400cc of $C_2H_5OH$

| σs (uemcgs/g) | σr (uemcgs/g) | Hc (oe) |
|---|---|---|
| 46.1 | 23.8 | 4900 |

Table V : reaction after 24 h dispersion by ultrasonics

| σs (uemcgs/g) | σr (uemcgs/g) | Hc (oe) |
|---|---|---|
| 46.0 | 23.6 | 4800 |

In any case, the results are the same as in the conditions of Example 1, which leads to think that the reaction is very fast.

Example 4

The procedure of Example 1 was repeated except that a FeO(OH) was replaced by γ FeO(OH) having an acicular morphology as seen by transition electron microscope at 25,000 X.

Barium hexaferrite appears as soon as 700°C is reached, however the acicular morphology remains up to 800°C.

The starting compound γ FeO(OH) after a 40 min heat treatment at 800°C loses its acicularity and begins to agglomerate.

The reaction product after a 10 min heat treatment at 800°C and also after a 40 min heat treatment at 800°C demonstrates an acicular morphology.

The results of magnetic determinations for products obtained at different temperatures and different annealing durations are shown in table VI.

TABLE. VI

| Heat treatment (T°C / time) | σs (uemcgs/g) (0.0065 Wb/m²) | σr (uemcgs/g) (0.0065 Wb/m²) | Hc (oe) (0.07958 KA/m) |
|---|---|---|---|
| 200 / 1 h | 9.4 | 1.4 | 50 |
| 300 / 1 h | 31.0 | 7.9 | 50 |
| 400 / 1 h | 31.5 | 10.6 | 50 |
| 450 / 1 h | 31.3 | 11.2 | 50 |
| 500 / 1 h | 30,1 | 10.5 | 50 |
| 600 / 1 h | 25.8 | 7.8 | 50 |
| 700 / 1 h | 30.0 | 11.6 | 2440 |
| 800 / 5 mn | 16.2 | 6.4 | 3000 |
| 800 /10 mn | 30.0 | 14.2 | 4050 |
| 800 /20 mn | 44.6 | 21.4 | 4260 |
| 800 /40 mn | 54.0 | 26.0 | 4300 |
| 800 /18 h | 60.1 | 29.0 | 4800 |
| 850 /40 mn | 58.1 | 28.2 | 4780 |
| 850 / 4 h | 60.5 | 29.5 | 5000 |
| 970 / 2 h | 63.8 | 32.6 | 5450 |
| 1000 /40 mn | 63.1 | 31.3 | 5350 |
| 1000 / 3 h | 65.2 | 32.9 | 5200 |
| 1000 / 8 h | 67.8 | 33.8 | 4600 |

Example 5

The procedure of Example 1 was repeated except that the starting product δ FeO(OH) was in nodular shape, prepared by the procedure of PCT WO 86/05026 and contained cobalt.

After heat treatment at 800°C for 40 mn, Co doped barium hexaferrite having a nodular form was obtained, the saturation magnetization of which was 58 uemcgs/g (0,377 $Wb/m^2$), the coercivity 3850 Oe (308 $KA/m^2$) and the specific surface area 24 $m^2/g$.

Viewing by transmission electron microscope reveals that both the starting δ FeO(OH) and the product hexaferrite have nodular morphology.

**Claims**

1. A process for the preparation of hexaferrite of a bivalent metal, in the form of particles having the morphology of the starting particles, characterized by

a) reacting FeO(OH) particles having an acicular, cubic or nodular morphology with a bivalent metal alkoxide, in alcoholic solution.

b) heat treating the product obtained in step a) after drying, at a temperature lower than the temperature at which the morphology of the starting FeO(OH) disappears.

2. A process according to claim 1, characterized in that the bivalent metal is barium, strontium, calcium, lead or cadmium.

3. A process according to claim 1, characterized in that the bivalent metal alkoxide is a methoxide, an ethoxide or a propoxide.

4. A process according to claim 1, characterized in that FeO(OH) particles are acicular.

5. A process according to claim 1, characterized in that FeO(OH) particles have a faceted nodular shape.

6. A process according to claim 1, characterized in that the heat treatment of step b) takes place at a temperature ranging from 700 to 850°C.

7. A process according to claim 1, characterized in that doping metal ions are introduced in any of step a) or b) of the process.

8. A process according to claim 1, characterized in that doping metal ions are introduced in the starting FeO(OH) particles.

9. A process according to claim 7, characterized in that the doping metal ions are cobalt ions.

10. Particles of a bivalent metal hexaferrite prepared by the process of claim 1.

11. Particles of a bivalent metal hexaferrite prepared by the process of claim 4 characterized in that the bivalent metal is barium and the particles exhibit an acicular shape.

12. Particles of a bivalent metal hexaferrite prepared by the process of claim 5, characterized in that the bivalent metal is barium and the particles exhibit a nodular shape.

13. Particles of barium hexaferrite prepared by the process of any of claims 7 to 9, characterized in that they comprise doping metal ions.

14. A magnetic recording element including a support coated with magnetic particles in a binder characterized in that the magnetic particles are prepared by the process of any of claims 1 to 9.

**Ansprüche**

1. Verfahren zur Herstellung eines Hexaferrites eines bivalenten Metalles in Form von Teilchen, die die Morphologie der Ausgangsteilchen aufweisen, gekennzeichnet durch :

a) Umsetzung von FeO(OH)-Teilchen mit einer acicularen, kubischen oder nodularen Morphologie mit einem bivalenten Metallalkoxid in alkoholischer Lösung und

b) Wärmebehandlung des in Stufe a) erhaltenen produktes nach dem Trocknen bei einer Temperatur, die niedriger ist als die Temperatur, bei der die Morphologie des Ausgangs-FeO(OH) verlorengeht.

2. Verfahren nach Anspruch 1, dadurch gekennzeichnet, daß das bivalente Metall aus Barium, Strontium, Calcium, Blei oder Cadmium besteht.

3. Verfahren nach Anspruch 1, dadurch gekennzeichnet, daß das bivalente Metallalkoxid aus einem Methoxid, einem Ethoxid oder Propoxid besteht.

4. Verfahren nach Anspruch 1, dadurch gekennzeichnet, daß die FeO(OH)-Teilchen acicular sind.

5. Verfahren nach Anspruch 1, dadurch gekennzeichnet, daß die FeO(OH)-Teilchen eine facettenartige

nodulare Form aufweisen.

6. Verfahren nach Anspruch 1, dadurch gekennzeichnet, daß die Wärmebehandlung der Stufe b) bei einer Temperatur von 700 bis 850°C erfolgt.

7. Verfahren nach Anspruch 1, dadurch gekennzeichnet, daß in einer der Stufen a) oder b) des Verfahrens Dotiermetallionen eingeführt werden.

8. Verfahren nach Anspruch 1, dadurch gekennzeichnet, daß Dotiermetallionen in die Ausgangs-FeO(OH)-Teilchen eingeführt werden.

9. Verfahren nach Anspruch 7, dadurch gekennzeichnet, daß die Dotiermetallionen aus Cobaltionen bestehen.

10. Teilchen aus einem bivalenten Metallhexaferrit, hergestellt nach dem Verfahren von Anspruch 1.

11. Teilchen aus einem bivalenten Metallhexaferrit, hergestellt nach dem Verfahren von Anspruch 4, dadurch gekennzeichnet, daß das bivalente Metall aus Barium besteht und die Teilchen eine aciculare Form aufweisen.

12. Teilchen aus einem bivalenten Metallhexaferrit, hergestellt nach dem Verfahren von Anspruch 5, dadurch gekennzeichnet, daß das bivalente Metall aus Barium besteht und die Teilchen eine nodulare Form aufweisen.

13. Teilchen aus Bariumhexaferrit, hergestellt nach dem Verfahren einer der Ansprüche 7 bis 9, dadurch gekennzeichnet, daß sie Dotiermetallionen enthalten.

14. Magnetisches Aufzeichnungselement mit einem Träger, der mit magnetischen Teilchen in einem Bindemittel beschichtet ist, dadurch gekennzeichnet, daß die magnetischen Teilchen nach dem Verfahren einer der Ansprüche 1 bis 9 hergestellt worden sind.

**Revendications**

1. Procédé pour la préparation d'un hexaferrite de métal bivalent, sous forme de particules possédant la morphologie des particules de départ, caractérisé en ce que

a) on fait réagir des particules de Fe O(OH), de morphologie aciculaire, cubique ou modulaire, avec un alkoxyde de métal bivalent, en solution alcoolique,

b) on traite à la chaleur le produit obtenu dans l'étape a) après séchage, à une température inférieure à la température à laquelle la morphologie du Fe O(OH) de départ disparait.

2. Procédé selon la revendication 1, caractérisé en ce que le métal bivalent est le barium, le strontium, le calcium, le plomb ou le cadmium.

3. Procédé selon la revendication 1, caractérisé en ce que l'alkoxyde de métal bivalent est un méthoxyde, un éthoxyde ou un propoxyde.

4. Procédé selon la revendication 1, caractérisé en ce que les particules de Fe O(OH) sont aciculaires.

5. Procédé selon la revendication 1, caractérisé en ce que les particules de Fe O(OH) sont des modules à facettes.

6. Procédé selon la revendication 1, caractérisé en ce que le traitement à la chaleur de l'étape b) est réalisé à une température entre 700 et 850 °C.

7. Procédé selon la revendication 1, caractérisé en ce que l'on introduit des ions métalliques dopants à l'une des étapes a) ou b).

8. Procédé selon la revendication 1, caractérisé en ce que l'on introduit des ions métalliques dopants dans les particules Fe O(OH).

9. Procédé selon la revendication 7, caractérisé en ce que les ions dopants sont des ions cobalt.

10. Particules d'hexaferrite de métal bivalent préparées selon le procédé de la revendication 1.

11. Particules d'hexaferrite de métal bivalent préparées par le procédé de la revendication 4, caractérisées en ce que le métal bivalent est le barium et en ce que les particules sont aciculaires.

12. Particules d'hexaferrite de métal bivalent préparées par le procédé de la revendication 5, caractérisées en ce que le métal bivalent est le barium et en ce que les particules sont nodulaires.

13. Particules d'hexaferrite de barium, préparées par le procédé de l'une des revendications 7 à 9, caractérisé en ce qu'elles comprennent des ions métalliques dopants.

14. Produit pour enregistrement magnétique comprenant un support avec une couche de particules magnétiques dans un liant, caractérisé en ce que les particules magnétiques ont été préparées par un procédé selon l'une des revendications 1 à 9.

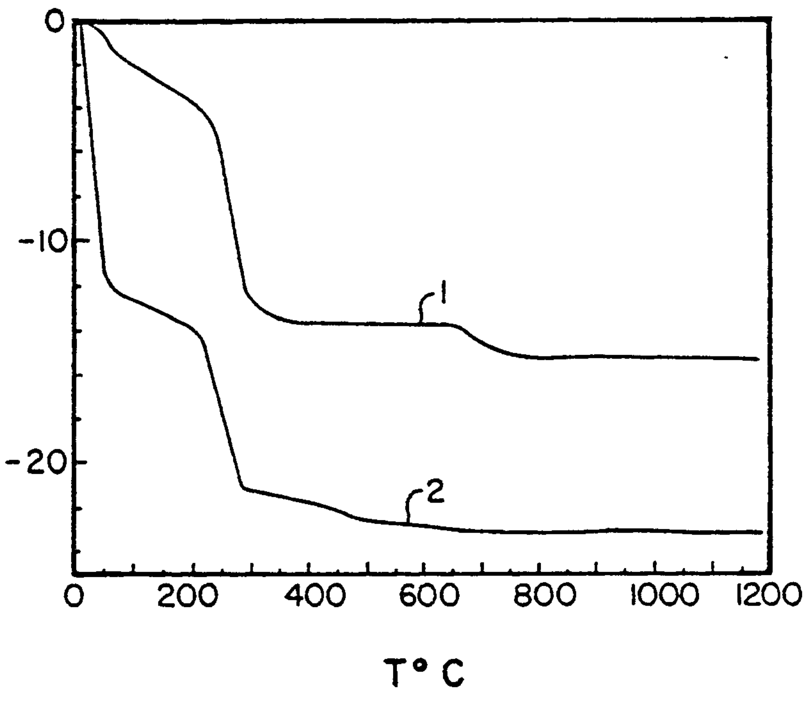
0
-10
-20
0
200
400
600
800
1000
1200
1
2
T° C